# FASCICULE DE BREVET EUROPEEN

(11) **EP 1 257 351 B1**
(45) Date de publication et mention de la délivrance du brevet: **04.05.2005**
(21) Numéro de dépôt: 01907773.4
(22) Date de dépôt: 13.02.2001
(51) Int. Cl.: B01F 17/00

(54) **NOUVELLE FAMILLE DE COMPOSITIONS A BASE D'ALKYLPOLYGLYCOSIDES ET DE DIMERDIOL, NOTAMMENT UTILES POUR LA PREPARATION D'EMULSIONS HUILE-DANS-EAU VAPORISABLES**
NEUE FAMILIE VON ZUSAMMENSETZUNGEN AUS ALKYLPOLYGLYKOSIDEN UND DIMERDIOLEN, INSBESONDERE VERWENDBAR FÜR DIE HERSTELLUNG VON VERSPRÜHBAREN ÖL-IN-WASSER EMULSIONEN
NOVEL FAMILY OF COMPOSITIONS BASED ON ALKYLPOLYGLYCOSIDES AND DIMERDIOL, IN PARTICULAR FOR USE IN PREPARING SPRAYABLE OIL-IN-WATER EMULSIONS

(30) Priorité: 14.02.2000 FR 0001783
(43) Date de publication de la demande: 20.11.2002
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: MILIUS, Alain, F-06000 Nice (FR); BOITEUX, Jean-Pierre, F-81710 Saix (FR); ROLLAND, Hervé, F-81100 Castres (FR); TABACCHI, Guy, F-75007 Paris (FR); AMALRIC, Chantal, F-81700 Blan (FR)
(74) Mandataire: Hubert, Philippe
(86) Numéro de dépôt international: PCT/FR2001/000408
(87) Numéro de publication internationale: WO 2001/058578

(56) Documents cités:
- Aucun document pertinent relevé

## Description

La présente invention concerne une nouvelle famille de compositions à base d'alkylpolyglycosides et de dimerdiol, notamment utiles pour la préparation d'émulsions huile-dans-eau vaporisables.

L'invention trouve principalement application dans le domaine cosmétique, mais son utilisation peut également être envisagée dans les domaines pharmaceutique (spray nasal, vaccin), phytosanitaire, du traitement du papier, du traitement des textiles ainsi que pour des applications ménagères ou industrielles (lubrifiants par exemple).

Dans le cadre de la présente description, l'expression "émulsion vaporisable" désigne une émulsion stable dans une zone de viscosité très faible inférieure à 3 000 cps, de préférence comprise entre 50 et 3 000 cps et de préférence encore comprise entre 100 et 1 500 cps. Ces émulsions sont encore désignées par l'expression "émulsions sprayables".

Les alkylglycosides ou alkylpolyglycosides (APG) sont des composés tensioactifs non ioniques bien connus qui peuvent être utilisés seuls, ou en association avec d'autres tensioactifs, dans une large gamme d'applications industrielles et notamment dans le domaine cosmétique.

Les alkylpolyglycosides ont d'abord été utilisés comme agents moussants et dans cette application, ceux dont la chaîne alkyle comporte de 8 à 14 atomes de carbone se sont avérés particulièrement intéressants.

Plus récemment, les alkylpolyglycosides ont été utilisés comme émulsionnants, et dans cette application, ceux dont la chaîne alkyle comporte de 16 à 18 atomes de carbone se sont avérés particulièrement intéressants.

La demande de brevet WO 92/06778, au nom de la demanderesse, décrit pour la première fois l'utilisation de mélanges d'alkylpolyglycosides et d'alcools gras en tant qu'agents auto-émulsionnants.

Par "auto-émulsionnant", on désigne tout agent ou composition capable de former une émulsion stable avec une phase aqueuse, pratiquement sans apport d'énergie, par exemple par dispersion dans la phase aqueuse par agitation mécanique lente.

Plus précisément, les mélanges décrits dans ce document antérieur comprennent :
- de 60 à 90 % en poids d'au moins un alcool gras ayant de 12 à 22 atomes de carbone, et de préférence de 16 à 18 atomes de carbone ; et
- de 10 à 40 % en poids d'un alkylpolyglycoside, dont la partie alkyle est de préférence identique à celle de l'alcool gras.

Les compositions auto-émulsionnables décrites dans la demande précitée sont commercialisées sous la dénomination Montanov® 68 et comportent un mélange d'alkylpolyglycosides dont les chaînes grasses comprennent 16 et 18 atomes de carbone, ainsi qu'un mélange d'alcools gras de même longueur de chaînes grasses.

Si de telles compositions sont parfaitement satisfaisantes, notamment au niveau de la stabilité des émulsions qu'elles permettent d'obtenir, elles sont solides et ne permettent cependant pas de préparer aisément des émulsions fluides.

Par ailleurs, la demande de brevet WO 95/13863, au nom de la demanderesse, décrit des compositions également à base d'alkylpolyglycosides et d'alcools gras, se présentant sous forme de concentrés, notamment utiles pour la préparation d'émulsions fluides.

Ces compositions sont essentiellement caractérisées par le fait qu'elles comprennent un mélange d'au moins deux alkylpolyglycosides se différenciant par la nature de leur partie alkyle.

Il est précisé que l'un au moins de ces alkylpolyglycosides comporte une chaîne alkyle ayant de 16 à 22 atomes de carbone, et de préférence de 16 à 18 atomes de carbone.

Il est en outre précisé que les alkylpolyglycosides comportant une chaîne alkyle ayant de 16 à 22 atomes de carbone doivent représenter 25 % au moins du mélange d'alkylpolyglycosides, et dans tous les exemples, ces alkylpolyglycosides comportent 16 ou 18 atomes de carbone et représentent au moins 50 % en poids du mélange d'alkylpolyglycosides.

Les compositions décrites dans ce document permettent de préparer des émulsions fluides de type huile-dans-eau, mais elles se présentent sous forme solide et, par conséquent, doivent être chauffées pour pouvoir être mises en oeuvre.

Dans le document FR 98.13255, on a proposé une nouvelle famille de compositions à base d'alkylpolyglycosides et d'alcools gras permettant à faible dose la préparation d'émulsions fluides stables, sans utilisation de co-tensioactif ou de stabilisant.

Ces compositions sont notamment caractérisées par le fait qu'elles comportent un mélange, dans des proportions bien définies, de quatre types d'alkylpolyglycosides comportant respectivement une chaîne alkyle ayant 12, 14, 16 ou 18, 20 ou 22 atomes de carbone.

Une composition telle que décrite dans ce document antérieur est commercialisée sous la dénomination Montanov® L et correspond à la composition décrite à l'exemple 1 de ce document.

Les compositions décrites dans ce document permettent de préparer des émulsions vaporisables de type huile-dans-eau, mais elles se présentent sous forme solide et, par conséquent, doivent être chauffées pour pouvoir être mises en oeuvre.

Dans le document FR 99.03429 on a proposé l'utilisation, en tant qu'émulsionnant, d'oléylglycoside et d'isostéarylglycoside en mélange avec l'alcool oléique ou l'alcool isostéarylique pour la préparation d'émulsions eau-dans-huile stables.

Les compositions décrites dans le document précité se présentent sous forme liquide et sont de ce fait d'une mise en oeuvre particulièrement aisée.

Cependant, elles ne permettent pas d'obtenir des émulsions de type huile-dans-eau.

Dans ces conditions, la présente invention a pour but de résoudre le problème technique consistant en la fourniture de nouvelles compositions liquides à base d'alkylpolyglycosides et d'alcools gras, permettant la préparation d'émulsions huile-dans-eau vaporisables.

La solution conforme à la présente invention pour résoudre ce problème technique consiste en de nouvelles compositions à base d'alkylpolyglycosides et de diols gras, caractérisées en ce qu'elles comprennent :
- 5 à 95 parties en poids d'un mélange d'alkylpolyglycosides constitué des produits de réaction d'un saccharide et d'un dimerdiol ayant 36 atomes de carbone :

- 95 à 5 parties en poids d'un dimerdiol ayant 36 atomes de carbone.

Il a été découvert, et ceci constitue le fondement de l'invention, que de telles compositions se présentent sous forme liquide et permettent d'obtenir des émulsions huile-dans-eau présentant des propriétés de stabilité dans une zone de viscosité très faible, particulièrement intéressantes, pour leurs utilisations par vaporisation, notamment dans le domaine cosmétique.

Par exemple, les compositions conformes à la présente invention peuvent être utilisées pour l'imprégnation de lingettes, ainsi que pour la préparation de produits auto-bronzants, de produits solaires ou après solaires et de façon générale pour toutes applications nécessitant une répartition homogène et/ou une pénétration rapide d'une substance active.

Les compositions préférées dans le cadre de la présente invention sont les compositions comprenant :
- 5 à 60 parties en poids du mélange précité d'alkylpolyglycosides ; et
- 95 à 40 parties en poids de dimerdiol ayant 36 atomes de carbone.

Le mélange d'alkylpolyglycosides constitué des produits de réaction d'un saccharide et d'un dimerdiol ayant 36 atomes de carbone est en fait constitué d'un mélange en toutes proportions d'hydroxyalkylpolyglycosides (produits résultant de l'acétalisation de l'un des deux groupes hydroxyles du dimerdiol) et de polyglycosylalkylpolyglycosides (produits résultant de l'acétalisation des deux groupes hydroxyles du dimerdiol).

Ces alkylpolyglycosides peuvent être représentés, respectivement par les formules I et II suivantes :

HO-R-O(G)ₙ (I)

(G)ₘ-O-R-O-(G)ₚ (II)

dans lesquelles :
G représente un reste de saccharide ;
R représente un groupe disubstitué dérivé de l'alcool dimère provenant de l'hydrogénation de l'acide dimère ;
n, m et p représentent le degré de polymérisation moyen de chaque reste de saccharide.

Le produit connu sous la dénomination "acide dimère" est un acide dibasique ayant 36 atomes de carbone dont le composé majoritaire peut être représenté par la formule :

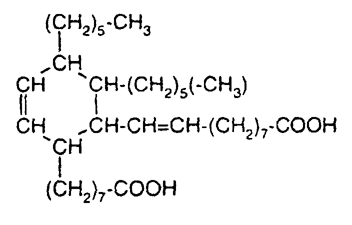

Les alkylpolyglycosides précités peuvent comporter, à titre de reste de saccharide, un reste de glucose ou dextrose, fructose, galactose, mannose, ribose, xylose, de préférence un reste de glucose.

Il est en outre à noter que chaque unité de la partie polyoside des alkylpolyglycosides précités peut être sous forme anomérique α ou β, et le reste de saccharide peut être de type furanoside ou pyranoside.

Le degré de polymérisation moyen de chaque reste de saccharide est généralement compris entre 1,05 et 2,5, de préférence encore entre 1,1 et 2.

L'expression "alkylpolyglycoside" utilisée dans le cadre de la présente demande désigne donc indifféremment un alkylmonooside (degré de polymérisation égal à 1) ou un alkylpolyglycoside (degré de polymérisation supérieur à 1).

Le dimerdiol utilisé pour la préparation des compositions conformes à la présente invention est un diol provenant de l'hydrogénation de l'acide dimère.

Il est notamment commercialisé par les Société HENKEL ou SIDOBRE-SINNOVA sous la dénomination SPEZIOL® C 36/2.

Ce composé, en raison de son origine, peut contenir des proportions mineures d'impuretés. De telles impuretés peuvent être présentes en des quantités allant jusqu'à 30 % en poids du poids total de diol.

Par conséquent, les compositions conformes à la présente invention peuvent comprendre, en des proportions mineures correspondantes, de telles impuretés, ou les produits de réaction de ces impuretés avec un saccharide.

Les compositions à base d'alkylpolyglycosides et de dimerdiol conformes à la présente invention peuvent être préparées par simple mélange de leurs constituants en des proportions prédéterminées souhaitées.

A l'échelle industrielle, on les préparera de préférence selon l'une des deux voies classiquement utilisées pour la synthèse des alkylpolyglycosides, et par exemple par réaction, en milieu acide, entre le dimerdiol et un saccharide disposant d'un OH anomérique, tel que le glucose ou le dextrose.

De telles voies de synthèse sont bien connues et ont été décrites dans de nombreux documents et en particulier dans les documents de la demanderesse rappelés précédemment.

Le cas échéant, cette synthèse pourra être complétée par des opérations de neutralisation, de filtration, de distillation ou d'extraction partielle du diol gras en excès ou de décoloration.

Les compositions à base alkylpolyglycosides et de dimerdiol conformes à la présente invention peuvent être notamment utilisées pour la préparation d'émulsions vaporisables huile-dans-eau cosmétiques, pharmaceutiques, hygiéniques ou détergentes.

Parmi les émulsions vaporisables qui peuvent être préparées dans le cadre de la présente invention, on citera en particulier les émulsions solaires, les sprays parfumants, les émulsions pour imprégnation de lingettes, les émulsions pour la préparation de mouchoirs hydratants, les produits démaquillants.

D'une façon générale, une telle émulsion comprendra de 1 à 25 % en poids, de préférence de 1 à 10 %, et de préférence encore de 1 à 5 % en poids de la composition à base d'alkylpolyglycosides et de dimerdiol conforme à la présente invention.

Par ailleurs, ces émulsions pourront comporter une phase huileuse.

La phase huileuse constitutive de l'émulsion peut être constituée par le dimerdiol libre constitutif de la composition émulsionnante de l'invention, sans qu'il ne soit nécessaire de mettre en oeuvre une autre huile. Mais plus généralement, on utilisera une huile choisie parmi les huiles suivantes :
- les huiles d'origine végétale, telles que l'huile d'amandes douces, l'huile de coprah, l'huile de ricin, l'huile de jojoba, l'huile d'olive. l'huile de colza, l'huile d'arachide, l'huile de tournesol, l'huile de germes de blé, l'huile de germes de maïs, l'huile de soja, l'huile de coton, l'huile de luzerne, l'huile de pavot, l'huile de potiron, l'huile d'onagre, l'huile de millet, l'huile d'orge, l'huile de seigle, l'huile de carthame, l'huile de bancoulier, l'huile de passiflore, l'huile de noisette, l'huile de palme, le beurre de karité, l'huile de noyau d'abricot, l'huile de calophyllum, l'huile de sysymbrium, l'huile d'avocat, l'huile de calendula ;
- les huiles végétales modifiées telles que les produits connus sous les dénominations INCl, Apricot Kernel Oil PEG-6 esters et Olive Oil PEG-6 esters ;
- les huiles d'origine naturelle, telles que le perhydrosqualène, le squalène ;
- les huiles minérales, telles que l'huile de paraffine ou huile de vaseline. et les huiles minérales, notamment issues de coupes pétrolières, telles que les isoparaffines, ayant un point d'ébullition compris entre 300 et 400°C ;
- les huiles synthétiques, notamment les esters d'acides gras tels que le myristate de butyle, le myristate de propyle, le myristate de cétyle, le palmitate d'isopropyle, le stéarate de butyle, le stéarate d'hexadécyle, le stéarate d'isopropyle, le stéarate d'octyle, le stéarate d'isocétyle, l'oléate dodécyle, le laurate d'hexyle, le dicaprylate de propylèneglycol, les esters dérivés d'acide lanolique, tels que le lanolate d'isopropyle, le lanolate d'isocétyle, les triglycérides comme le triheptanoate de glycérol, les alkylbenzoates, les isoparaffines, les poly-alphaoléfines, les polyoléfines, les isoalcanes de synthèse comme l'isohexadecane, l'isododécane et les huiles de silicone. Parmi ces dernières, on peut plus particulièrement citer les diméthylpolysiloxanes, méthylphénylpolysiloxanes, les silicones modifiés par des amines, les silicones modifiés par des acides gras, les silicones modifiés par des alcools, les silicones modifiés par des alcools et des acides gras, des silicones modifiés par des groupements polyéther, des silicones époxy modifiés, des silicones modifiés par des groupements fluorés, des silicones cycliques et des silicones modifiés par des groupements alkyles.

D'une façon générale, les émulsions conformes à la présente invention comprendront jusqu'à 50% et de préférence entre 2 et 30 % en poids de phase huileuse telle que définie précédemment.

Ces émulsions peuvent être préparées par simple dispersion d'une phase grasse constituée de la composition selon l'invention et éventuellement d'une ou plusieurs huiles telles que décrites ci-dessus, dans une phase hydrophile, généralement de l'eau ou un solvant hydrophile.

La dispersion sera réalisée de préférence à froid, tous les constituants devant être liquides au moment du mélange.

Ces émulsions peuvent, en outre, comprendre un agent émulsionnant complémentaire en une quantité telle que la quantité totale d'agents émulsionnants au sein de l'émulsion soit inférieure ou égale à 25 % en poids.

Ainsi. selon un deuxième aspect, la présente demande vise à couvrir des émulsions liquides, de type huile-dans-eau, vaporisables comprenant au moins une phase aqueuse et une phase huileuse et, à titre d'émulsionnant, une composition à base d'alkylpolyglycosides et de dimerdiol telle que définie précédemment.

Les émulsions particulièrement préférés dans le cadre de la présente invention comporteront généralement :
- de 1 à 10 % en poids d'une composition à base d'alkylpolyglycosides et de dimerdiol telle que définie précédemment ;
- de 0 à 50 % en poids d'huile ; et
- une phase aqueuse.

L'invention sera illustrée plus en détail par les exemples suivants, donnés uniquement à titre illustratif.

### EXEMPLE 1

### Procédé de préparation d'une composition conforme à l'invention par acétalisation directe.

450 g d'alcool dimère en C₃₆ (commercialisé par la Société Sidobre-Sinnova sous la dénomination SPEZIOL® C36/2) sont introduits dans un réacteur en verre de deux litres, équipé d'une agitation mécanique efficace, d'un système de chauffage par double enveloppe, d'un condenseur et d'une sonde de température.

L'alcool dimère, qui se présente sous la forme d'un liquide visqueux, est chauffé à 80°C et 75 g de dextrose anhydre sont dispersés dans le milieu réactionnel puis homogénéisés à 80°C pendant 15 minutes.

La température est alors fixée à 105°C et 2 g d'acide sulfurique à 96 % sont alors ajoutés.

Le mélange réactionnel est alors maintenu 8 heures à 105°C sous vide partiel et avec un barbotage d'azote.

Après refroidissement à 90°C, le mélange réactionnel est neutralisé de façon à obtenir une valeur du pH d'une solution à 5 % du milieu réactionnel d'environ 6,2, par ajout d'une solution de lessive de soude.

Le produit résultant se présente sous la forme d'un liquide visqueux présentant une teneur en alcool dimère libre de 70 % en poids.

### EXEMPLE 2

### Procédé de préparation d'une composition conforme à l'invention par transétherification.

### 2a) Préparation du butylglucoside

900 g d'alcool butylique et 50 g d'heptane sont introduits dans un réacteur en verre de deux litres, équipé d'une double enveloppe, d'une agitation mécanique efficace, d'une sonde thermométrique, d'un système de distillation de type Dean-Stark.

Le milieu est porté à 85°C, température à laquelle 360 g de dextrose anhydre et 1,8 g d'acide sulfurique à 96 % sont ajoutés.

Le mélange est alors chauffé à 105-110°C pendant 4 heures avec recirculation en continu du mélange heptane/butanol qui distille.

### 2b) Transétherification

625 g du milieu réactionnel précédent, contenant 65 à 60% de butanol résiduel sont chauffés à 85°C et 1140 g d'alcool dimère en C36 (SPEZIOL® C36/2) sont ajoutés en dispersion.

Le mélange est alors chauffé à 95°C, sous vide partiel, pendant 5 heures avec distillation continue de l'alcool butylique.

Le milieu réactionnel est ensuite refroidi à 85°C, neutralisé de façon à obtenir une valeur de pH d'une solution à 5% du milieu réactionnel comprise entre 5.5 et 7.5 avec une solution de lessive de soude.

Le produit obtenu, qui est liquide à température ambiante, présente une teneur en alcool dimère libre de 50 % en poids.

### EXEMPLE 3

### Procédé de préparation d'une composition conforme à l'invention par acétalisation directe.

792,8 d'alcool dimère en C₃₆ (commercialisé par la Société COGNIS sous la dénomination SPEZIOL® C_{36/2}) sont introduits dans un réacteur en verre de deux litres, équipé d'une agitation mécanique efficace, d'un système de chauffage par double enveloppe, d'un condensateur et d'une sonde de température.

L'alcool dimère est chauffé à 90°C et 112,0 g de xylose sont dispersés dans le milieu réactionnel puis homogénéisés à 90°/95°C pendant 15 minutes.

1,90 g d'acide sulfurique à 98% et 1,31 g d'acide hypophosphoreux à 50% sont ajoutés et le mélange réactionnel est maintenu à 95°C pendant 4 heures sous vide partiel, avec un barbotage d'azote.

Après refroidissement à 80°C, le mélange est neutralisé de façon à atteindre une valeur du pH d'une solution à 5% du milieu réactionnel d'environ 7,1 par ajout d'une solution de borohydrure de sodium dans la lessive de soude.

Le produit résultant se présente sous la forme d'un liquide limpide et visqueux, présentant une teneur en alcool libre de 50% en poids.

### EXEMPLE 4

### Mise en évidence des propriétés des compositions conformes à la présente invention en tant qu'émulsionnants pour la préparation d'émulsions liquides huile-dans-eau vaporisables

On a réalisé des émulsions en utilisant en tant qu'émulsionnants, les produits des exemples 1 et 2.

Dans les conditions expérimentales utilisées (jusqu'à 50 % en poids de phases grasses et 10 % en poids d'émulsionnant), tous les produits des exemples ont conduit à l'obtention d'émulsions huile-dans-eau (détermination par la méthode de la goutte).

Ces émulsions étaient toutes vaporisables, les viscosités étant inférieures à 3 000 cps et généralement comprises entre 100 et 1 500 cps.

### EXEMPLES 5 à 9

### Exemples d'émulsions huile-dans-eau vaporisables incorporant les compositions à base d'alkylpolyglycosides et de dimerdiol selon l'invention

### EXEMPLE 5

### EMULSION SOLAIRE VAPORISABLE

| | | | |
|---|---|---|---|
| A) | Composition de l'exemple 1 | | 2 % |
| | Octylméthoxycinnamate | | 6 % |
| | C₈-C₁₀ triglycéride | | 4 % |
| | | | |
| B) | Eau | qsp | 100 % |
| | EDTA disodique | | 0,2 % |
| | Gomme xanthane | | 0,1 % |
| | Parfum | | 0,1 % |

On disperse l'EDTA et la gomme xanthane dans l'eau. On ajoute la composition de l'exemple 1 puis les différentes huiles. On émulsionne avec une turbine rotor stator, le tout à température ambiante.

### Caractéristiques

Lotion vaporisable : 500 cps
Stabilité : supérieure à 1 mois à température ambiante

### EXEMPLE 6

### SPRAY PARFUMANT SANS ALCOOL

| | | | |
|---|---|---|---|
| A) | Composition de l'exemple 2 | | 3 % |
| | Concentré parfumant | | 2 % |
| | Polyisobutène | | 5 % |
| | | | |
| B) | Eau | qsp | 100 % |
| | Micropearl® M211 | | 2 % |
| | SIMULGEL® EG | | 0,2 % |

On prémélange les constituants de la phase grasse A. On ajoute le Simulgel®. On ajoute ensuite le Micropearl® puis l'eau.

On émulsionne avec une turbine rotor stator. Le tout à température ambiante.

### Caractéristiques

Lotion vaporisable : 300 cps
Stabilité : supérieure à 1 mois à température ambiante.

### EXEMPLE 7

### SPRAY DEPOUSSIERANT

| | | | |
|---|---|---|---|
| A) | Composition de l'exemple 2 | | 3,5 % |
| | Huile de lin | | 0,5 % |
| | Diméthicone | | 3,5 % |
| | | | |
| B) | Eau | qsp | 100 % |

On mélange les constituants de la phase grasse A puis on ajoute l'eau. On émulsionne avec une turbine rotor stator. Le tout, à température ambiante.

### Caractéristiques

Lotion vaporisable : 50 cps
Stabilité : supérieure à 1 mois à température ambiante.

### EXEMPLE 8

### EMULSION FLUIDE POUR IMPREGNATION DE LINGETTES BEBE

| | | | |
|---|---|---|---|
| A) | Composition de l'exemple 2 | | 2,5 % |
| | Huile de paraffine | | 5 % |
| | | | |
| B) | Eau | qsp | 100 |
| | Sorbitol 70 % | | 5 % |
| | | | |
| C) | Parfum | | 0,10 % |
| | Conservateurs | | QS |

On mélange le sorbitol et l'eau, on ajoute la composition de l'exemple 2, puis l'huile de paraffine, le parfum et les conservateurs.

On émulsionne avec une turbine rotor stator à température ambiante.

### Caractéristiques

Lotion vaporisable : 150 cps
Stabilité : supérieure à 1 mois à température ambiante.

### EXEMPLE 9

### EMULSION FLUIDE POUR PULVERISATION DE MOUCHOIRS (FABRICATION DE MOUCHOIRS HYDRATANTS)

| | | | |
|---|---|---|---|
| A) | Composition de l'exemple 2 | | 1 % |
| | Huile de calendula | | 2 % |
| | | | |
| B) | Eau | qsp | 100 % |
| | Propylèneglycol | | 5 % |

On mélange le propylèneglycol et l'eau, on ajoute la composition de l'exemple 2 puis l'huile, on émulsionne avec une turbine rotor stator, le tout à température ambiante.

### Caractéristiques

Emulsion vaporisable : 200 cps
Stabilité : supérieure à 1 mois à température ambiante.

## Revendications

1. Compositions à base d'alkylpolyglycosides et de dimerdiol, **caractérisées en ce qu'**elles comprennent :
- 5 à 95 parties en poids d'un mélange d'alkylpolyglycosides constitué des produits de réaction d'un saccharide et d'un dimerdiol ayant 36 atomes de carbone ;
- 95 à 5 parties en poids d'un dimerdiol ayant 36 atomes de carbone.

2. Compositions selon la revendication 1, **caractérisées en ce qu'**elles comprennent :
- 5 à 60 parties en poids du mélange précité d'alkylpolyglycosides ; et
- 95 à 40 parties en poids de dimerdiol ayant 36 atomes de carbone.

3. Compositions selon l'une des revendications 1 ou 2, **caractérisées en ce que** le mélange d'alkylpolyglycosides précité est constitué d'un mélange en toutes proportions d'hydroxyalkylpolyglycosides et de polyglycosylalkylpolyglycosides qui peuvent être représentés, respectivement, par les formules (I) et (II) suivantes :
HO-R-O(G)ₙ (I)
(G)ₘ-O-R-O-(G)ₚ (II)
dans lesquelles :
G représente un reste de saccharide ;
R représente un groupe disubstitué dérivé de l'alcool dimère provenant de l'hydrogénation de l'acide dimère ;
n, m et p représentent le degré de polymérisation moyen de chaque reste de saccharide.

4. Compositions selon la revendication 3, **caractérisées en ce que** dans les formules (I) et (II) précitées :
- G représente un reste de glycose choisi parmi le glucose, dextrose, fructose, galactose, mannose, ribose ou xylose ; et
- n, m et p représentent un nombre compris entre 1,05 et 2,5, de préférence entre 1,1 et 2.

5. Emulsions vaporisables du type huile-dans-eau comprenant une phase aqueuse, une phase huileuse et un émulsionnant, **caractérisées en ce que** ledit émulsionnant est constitué par une composition à base d'alkylpolyglycosides et dimerdiol telle que définie selon l'une quelconque des revendications 1 à 4.

6. Emulsions selon la revendication 5, **caractérisées en ce qu'**elles comprennent :
- de 1 à 10 % en poids d'une composition à base d'alkylpolyglycosides et de dimerdiol telle que définie selon l'une des revendications 1 à 4 ;
- de 0 à 50 % en poids et de préférence entre 2 et 30 % en poids d'huile ; et
- une phase aqueuse.

## Patentansprüche

1. Zusammensetzungen auf Basis von Alkylpolyglykosiden und Dimerdiolen, **dadurch gekennzeichnet, dass** diese aufweisen:
- 5 bis 95 Gewichtsanteile einer Mischung von Alkylpolyglykosiden, gebildet aus Reaktionsprodukten eines Saccharids und eines Dimerdiols mit 36 Kohlenstoffatomen;
- 95 bis 5 Gewichtsanteile eines Dimerdiols mit 36 Kohlenstoffatomen.

2. Zusammensetzungen gemäß Anspruch 1, **dadurch gekennzeichnet, dass** diese aufweisen:
- 5 bis 60 Gewichtsanteile der oben genannten Mischung von Alkylpolyglykosiden; und
- 95 bis 40 Gewichtsanteile von Dimerdiol mit 36 Kohlenstoffatomen.

3. Zusammensetzungen gemäß einem der Ansprüche 1 oder 2, **dadurch gekennzeichnet, dass** die oben genannte Mischung von Alkylpolyglykosiden gebildet ist aus einer Mischung von Hydroxyalkylpolyglykosiden und Polyglykosylalkylpolyglykosiden in allen Verhältnissen, die jeweils durch die nachfolgenden Formeln (I) und (II) dargestellt werden können:
HO-R-O(G)ₙ (I)
(G)ₘ-O-R-O-(G)ₚ (II)
in welchen:
G einen Saccharidrest darstellt;
R eine disubstituierte Gruppe darstellt, abgeleitet von Dimeralkohol, der aus der Hydrierung von Dimersäure hervorgeht;
n, m und p den mittleren Polymerisationsgrad jedes Saccharidrests darstellen.

4. Zusammensetzungen gemäß Anspruch 3, **dadurch gekennzeichnet, dass** in den oben genannten Formeln (I) und (II):
- G einen Glycoserest darstellt gewählt aus Glucose, Dextrose, Fructose, Galactose, Manose, Ribose oder Xylose; und
- n, m und p eine Zahl darstellen zwischen 1,05 und 2,5, vorzugsweise zwischen 1,1 und 2.

5. Versprühbare Emulsionen der Art Öl-in-Wasser, welche eine wässrige Phase, eine ölige Phase und ein Emulsionsmittel aufweisen, **dadurch gekennzeichnet, dass** das Emulsionsmittel gebildet ist aus einer Zusammensetzung auf Basis von Alkylpolyglykosiden und Dimerdiol, wie gemäß irgendeinem der Ansprüche 1 bis 4 definiert.

6. Emulsionen gemäß Anspruch 5, **dadurch gekennzeichnet, dass** diese aufweisen:
- 1 bis 10 Gew.-% einer Zusammensetzung auf Basis von Alkylpolyglykosiden und von Dimerdiol, wie gemäß einem der Ansprüche 1 bis 4 definiert;
- 0 bis 50 Gew.-%, und vorzugsweise zwischen 2 und 30 Gew.-% Öl; und
- eine wässrige Phase.

## Claims

1. Compositions based on alkylpolyglycosides and dimerdiol, **characterised in that** they comprise :
- 5 to 95 parts by weight of a mixture of alkylpolyglycosides which is constituted of the products of a reaction of a saccharide and a dimerdiol having 36 carbon atoms;
- 95 to 5 parts by weight of a dimerdiol having 36 carbon atoms.

2. Compositions according to claim 1, **characterised in that** they comprise :
- 5 to 60 parts by weight of the above-mentioned mixture of alkylpolyglycosides ; and
- 95 to 40 parts by weight of dimerdiol having 36 carbon atoms.

3. Compositions according to one of claims 1 or 2, **characterised in that** the mixture of alkylpolyglycosides mentioned above is constituted of a mixture of any proportion of hydroxyalkylpolyglycosides and of polyglycosylalkylpolyglycosides which can be represented, respectively, by the following formulae (I) and (II) :
HO-R-O(G)ₙ (I)
(G)ₘ-O-R-O-(G)ₚ (II)
in which :
G represents a saccharide residue ;
R represents a disubstituted group derived from the dimer alcohol originating from the hydrogenation from the dimer acid ;
n, m and p represent the average degree of polymerisation of each saccharide residue.

4. Compositions according to claim 3, **characterised in that** in the formulae (I) and (II) mentioned above :
- G represents a glycose residue selected from glucose, dextrose, fructose, galactose, mannose, ribose or xylose ; and
- n, m and p represent a number between 1.05 and 2.5, preferably between 1.1 and 2.

5. Vaporisable emulsions of the oil-in-water type comprising an aqueous phase, an oily phase and an emulsifier, **characterised in that** said emulsifier is constituted by a composition based on alkylpolyglycosides and dimerdiol as defined according to any one of claims 1 to 4.

6. Emulsions according to claim 5, **characterised in that** they comprise :
- from 1 to 10 % by weight of a composition based on alkylpolyglycosides and dimerdiol as defined according to one of claims 1 to 4 ;
- from 0 to 50 % by weight and preferably between 2 and 30 % by weight of oil ; and
- an aqueous phase.
